# EUROPEAN PATENT APPLICATION

(11) **EP 2 658 233 A1**
(43) Date of publication of application: **30.10.2013**
(21) Application number: 11850822.5
(22) Date of filing: 22.12.2011
(51) Int. Cl.: H04M 15/00, H04M 11/00

(54) **COMMUNICATION SYSTEM, SERVICE CONTROL DEVICE, AND COMMUNICATION METHOD**

(30) Priority: 24.12.2010 JP 2010288783
(71) Applicant: NTT DOCOMO, INC., Chiyoda-ku Tokyo 100-6150 (JP)
(72) Inventor: WAKUI Michiko, Tokyo 100-6150 (JP); ASO Hisayuki, Tokyo 100-6150 (JP); TAKEUCHI Nobuo, Tokyo 100-6150 (JP)
(74) Representative: Viering, Jentschura & Partner
(86) International application number: PCT/JP2011/079885
(87) International publication number: WO 2012/086784

(57) **Abstract**

A communication system 1 includes a GGSN 20 calculating a communication volume of a mobile terminal 40, and a service control device 30 storing a charge remaining amount corresponding to a communication volume available to the mobile terminal 40. The service control device 30 includes an inquiry acceptance unit 37 accepting an inquiry for the charge remaining amount of the mobile terminal 40, a communication state determination unit 36 determining whether the mobile terminal 40 is in communication, an updated remaining amount reception unit 33 acquiring the charge remaining amount updated in accordance with the communication volume calculated by the GGSN 20 when the communication state determination unit 36 determines that the mobile terminal 40 is in communication, and a remaining amount notification unit 38 notifying of the charge remaining amount of the mobile terminal 40 in response to the inquiry that the inquiry acceptance unit 37 has accepted.

## Description

### Technical Field

The present invention relates to a communication system for a mobile terminal, a service control device used in the communication system, and a communication method executed on the communication system.

### Background Art

Conventionally, there has been a communication system for a mobile terminal using a General Packet Radio Service (GPRS). This communication system includes a communication control device that calculates a communication fee for the mobile terminal. The communication control device is a Gateway GPRS Support Node (GGSN) that is a gateway switch for connection between different networks, a Service GPRS Support Node (SGSN) that is a switch arranged subordinate to the GGSN, or the like.

For the mobile terminal utilizing the communication system described above, usage fee is charged. For example, a prepaid charging scheme in which a usage fee for communication is paid in advance so that communication of a mobile terminal within a range of a communication volume corresponding to the paid fee is possible is disclosed in Patent Literature 1.

### Citation List

### Patent Literature

[Patent Literature 1] Japanese Patent Application Laid-Open Publication No. 2005-204323

### Summary of Invention

### Technical Problem

In a prepaid charging scheme, it is generally conceivable to store a charge remaining amount corresponding to the communication volume in which communication is possible in a service control device under the management of a communication carrier. In this case, a user of the mobile terminal for example can access the service control device to know the charge remaining amount.

However, since the communication volume of the mobile terminal in communication is calculated not in the service control device but in a communication control device, there has been a possibility that a real-time notification of the charge remaining amount in accordance with the current communication is not feasible when the remaining amount of charge is inquired during communication.

Thus, it is an object of the present invention to provide a communication system, a service control device, and a communication method with which a real-time notification of a charge remaining amount of a mobile terminal in communication is feasible.

### Solution to Problem

A communication system according to the present invention is a communication system including a communication control device that calculates a communication volume of a mobile terminal and a service control device that stores a charge remaining amount corresponding to a communication volume available to the mobile terminal, wherein the service control device includes communication state storage means for storing information indicating a communication state of the mobile terminal, inquiry acceptance means for accepting an inquiry for the charge remaining amount of the mobile terminal, communication state determination means for determining whether the mobile terminal is in communication on the basis of the information stored in the communication state storage means, updated remaining amount acquisition means for acquiring the charge remaining amount updated in accordance with the communication volume calculated by the communication control device when the communication state determination means determines that the mobile terminal is in communication, and remaining amount notification means for notifying of the charge remaining amount of the mobile terminal in response to the inquiry that the inquiry acceptance means has accepted.

In addition, a service control device according to the present invention is a service control device that, in a communication system including a communication control device calculating a communication volume of a mobile terminal, stores a charge remaining amount corresponding to a communication volume available to the mobile terminal, including communication state storage means for storing information indicating a communication state of the mobile terminal, inquiry acceptance means for accepting an inquiry for the charge remaining amount of the mobile terminal, communication state determination means for determining whether the mobile terminal is in communication on the basis of the information stored in the communication state storage means, updated remaining amount acquisition means for acquiring the charge remaining amount updated in accordance with the communication volume calculated by the communication control device when the communication state determination means determines that the mobile terminal is in communication, and remaining amount notification means for notifying of the charge remaining amount of the mobile terminal in response to the inquiry that the inquiry acceptance means has accepted.

In addition, a communication method according to the present invention is a communication method executed by a communication system including a communication control device that calculates a communication volume of a mobile terminal and a service control device that stores a charge remaining amount corresponding to a communication volume available to the mobile terminal, including a communication state storage step of, by the service control device, storing information indicating a communication state of the mobile terminal, an inquiry acceptance step of, by the service control device, accepting an inquiry for the charge remaining amount of the mobile terminal, a communication state determination step of, by the service control device, determining whether the mobile terminal is in communication on the basis of the information stored in the communication state storage step, an updated remaining amount acquisition step of, by the service control device, acquiring the charge remaining amount updated in accordance with the communication volume calculated by the communication control device when it is determined that the mobile terminal is in communication in the communication state determination step, and a remaining amount notification step of, by the service control device, notifying of the charge remaining amount of the mobile terminal in response to the inquiry accepted in the inquiry acceptance step.

With such a communication system, service control device, and communication method, when the charge remaining amount of the mobile terminal is inquired, whether that mobile terminal is in communication is determined by the service control device. In the case where that mobile terminal is in communication, the charge remaining amount updated in accordance with the communication volume calculated by the communication control device is acquired and notified. Therefore, a real-time notification of the charge remaining amount of the mobile terminal in communication is feasible. In addition, the charge remaining amount of the mobile terminal in communication is acquired after the service control device received the inquiry for the charge remaining amount. Therefore, it is not necessary to continue updating the charge remaining amount stored in the service control device in preparation for an inquiry during communication, and the load on the communication control device and the service control device is reduced.

Herein, in a specific example of the communication system, the communication control device may be a switch arranged for each communication area. In this case, the load in a process of calculating the communication volume of the mobile terminal is distributed to the switch arranged for each communication area.

In addition, in another specific example of the communication system, the communication control device may be a gateway switch for connection to an external network and include communication state transmission means for transmitting the information indicating the communication state of the mobile terminal, and the communication state storage means in the service control device stores the information indicating the communication state of the mobile terminal transmitted by the communication state transmission means. In this case, the information indicating the communication state of the mobile terminal is transmitted from the gateway switch involved with the communication state of the mobile terminal and therefore is acquired and stored in the service control device reliably.

In yet another specific example of the communication system, in the communication control device, the communication state transmission means transmits an address of the gateway switch, and in the service control device, the communication state storage means stores the address of the gateway switch transmitted by the communication state transmission means, and the communication state determination means determines whether the mobile terminal is in communication on the basis of whether the address of the gateway switch is stored in the communication state storage means. In this case, the address for identifying the gateway switch is also utilized in the determination on whether the mobile terminal is in communication, and the data volume that the communication state storage unit should store is reduced.

### Advantageous Effects of Invention

With the communication system, the service control device, and the communication method according to the present invention, a real-time notification of the charge remaining amount of the mobile terminal in communication is feasible.

### Brief Description of Drawings

[Fig. 1] Fig. 1 is a view illustrating an overall configuration of one embodiment of a communication system according to the present invention.
[Fig. 2] Fig. 2 is a function block diagram of a GGSN that calculates a communication volume.
[Fig. 3] Fig. 3 is a function block diagram of a service control device.
[Fig. 4] Fig. 4 is a flowchart illustrating the procedure of a charge remaining amount notification process.
[Fig. 5] Fig. 5 is a function block diagram of an SGSN that calculates the communication volume.
[Fig. 6] Fig. 6 is a flowchart illustrating the procedure of a charge remaining amount notification process in the case where the SGSN calculates the communication volume.

### Description of Embodiments

A preferred embodiment of a service control device and a communication system applied with a communication method according to the present invention will be described below with reference to the drawings. Note that, in the description of the drawings, the same component is denoted by the same reference numeral, and redundant descriptions are omitted.

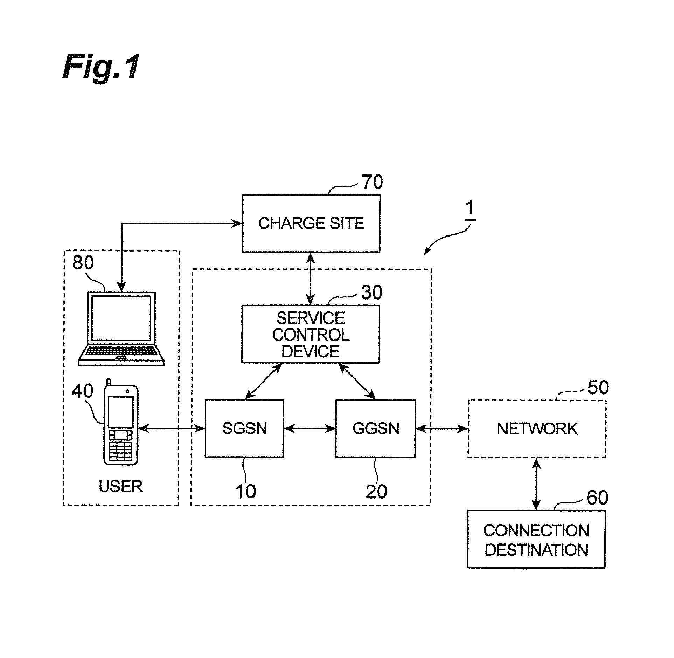

Fig. 1 is a view illustrating an overall configuration of one embodiment of a communication system according to the present invention, and a communication system 1 is a communication system using a GPRS. As illustrated in Fig. 1, the communication system 1 includes an SGSN 10 that is a switch, a GGSN 20 that is a gateway switch, and a service control device 30. The service control device 30 is a home location register (HLR), for example. The communication system 1 is utilized in the communication of a mobile terminal 40 for which a prepaid charging scheme is selected, but is also applicable in a postpaid charging scheme. The mobile terminal 40 connects to a network 50 via the SGSN 10 and the GGSN 20 and performs packet communication with a connection destination 60 on the network 50.

A user of the mobile terminal 40 can pay a usage fee in advance to a communication carrier managing the communication system 1 and perform packet communication up to a communication packet volume corresponding to the paid fee. A charge remaining amount corresponding to the available communication packet volume is stored in the service control device 30. The communication packet volume of the mobile terminal 40 in communication is calculated by the GGSN 20, and the charge remaining amount decreases in accordance with a calculation result. That is, the GGSN 20 is a communication control device that calculates the communication packet volume of the mobile terminal 40. The service control device 30 includes a charge site 70 that is publicly open on a network. The charge site 70 is an interface accessible to the user, for example, of the mobile terminal 40. For example, the user of the mobile terminal 40 can access the charge site 70 with a personal computer 80 to know the charge remaining amount of the mobile terminal 40. The charge site 70 can also be accessed from the mobile terminal 40 that is the terminal itself.

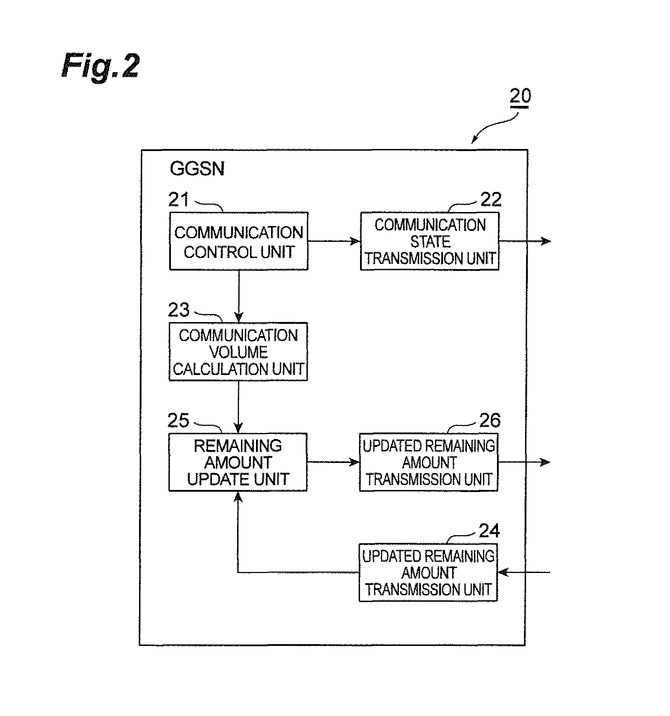

Fig. 2 is a function block diagram of the GGSN that calculates the communication volume. As illustrated in Fig. 2, the GGSN 20 includes a communication control unit 21, a communication state transmission unit 22, a communication volume calculation unit 23, a stored remaining amount reception unit 24, a remaining amount update unit 25, and an updated remaining amount transmission unit 26.

The communication control unit 21 performs communication control as a gateway switch. The communication state transmission unit 22 transmits an address of the GGSN 20 to the service control device 30.

The GGSN 23 calculates the communication packet volume of the mobile terminal 40. The stored remaining amount reception unit 24 acquires the charge remaining amount stored in the service control device 30 upon start of communication of the mobile terminal 40. The remaining amount update unit 25 subtracts the communication packet volume calculated by the communication volume calculation unit 23 from the charge remaining amount acquired by the stored remaining amount reception unit 24 and updates the charge remaining amount. The updated remaining amount transmission unit 26 transmits the charge remaining amount updated in the remaining amount update unit 25 to the service control device 30.

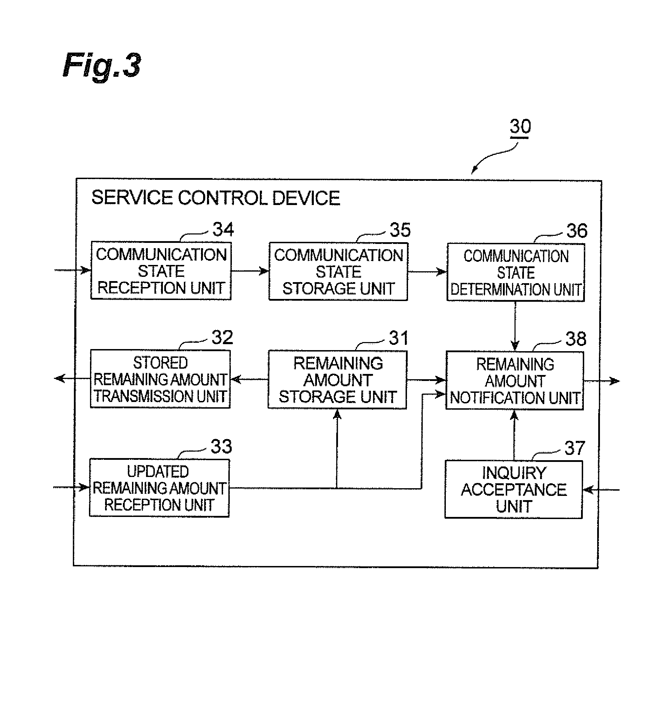

Fig. 3 is a function block diagram of the service control device. As illustrated in Fig. 3, the service control device 30 includes a remaining amount storage unit 31, a stored remaining amount transmission unit 32, an updated remaining amount reception unit 33, a communication state reception unit 34, a communication state storage unit 35, a communication state determination unit 36, an inquiry acceptance unit 37, and a remaining amount notification unit 38.

The remaining amount storage unit 31 stores the charge remaining amount of the mobile terminal 40. The stored remaining amount transmission unit 32 transmits the charge remaining amount stored in the remaining amount storage unit 31 to the stored remaining amount reception unit 24 of the GGSN 20. The updated remaining amount reception unit 33 receives the charge remaining amount updated in the remaining amount update unit 25 of the GGSN 20 from the updated remaining amount transmission unit 26. When communication of the mobile terminal 40 is terminated, the charge remaining amount updated by the remaining amount update unit 25 of the GGSN 20 is received by the updated remaining amount reception unit 33 from the updated remaining amount transmission unit 26 and stored in the remaining amount storage unit 31.

The communication state reception unit 34 receives the address of the GGSN 20 transmitted from the communication state transmission unit 22 of the GGSN 20. The communication state storage unit 35 stores the address of the GGSN 20 that the communication state reception unit 34 has received. The communication state storage unit 35 discards the stored address of the GGSN 20 when communication of the mobile terminal 40 is terminated. The discarding of the address of the GGSN 20 by the communication state storage unit 35 is performed on the basis of a termination notification signal sent from the GGSN 20, for example. The communication state determination unit 36 determines that the mobile terminal 40 is in communication in the case where the address of the GGSN 20 is stored in the communication state storage unit 35 but determines that the mobile terminal 40 is not in communication in the case where it is not stored. That is, in this embodiment, the address of the GGSN 20 is information indicating the communication state of the mobile terminal 40. The address of the GGSN 20 stored in the communication state storage unit 35 is used to identify the GGSN 20 in the transmission of the charge remaining amount to the GGSN 20 from the stored remaining amount transmission unit 32 and the reception of the charge remaining amount by the updated remaining amount reception unit 33 from the GGSN 20.

The inquiry acceptance unit 37 accepts an inquiry for the charge remaining amount of the mobile terminal 40 via the charge site 70 described above. The remaining amount notification unit 38 notifies of the charge remaining amount of the mobile terminal 40 in response to the inquiry that the inquiry acceptance unit 37 has accepted. The remaining amount notification unit 38 refers to a determination result of the communication state determination unit 36, and acquires the charge remaining amount with the updated remaining amount reception unit 33 and outputs the acquired charge remaining amount to the charge site 70 in the case where the mobile terminal 40 is in communication. The remaining amount notification unit 38 outputs the charge remaining amount stored in the remaining amount storage unit 31 to the charge site 70 in the case where the mobile terminal 40 is not in communication.

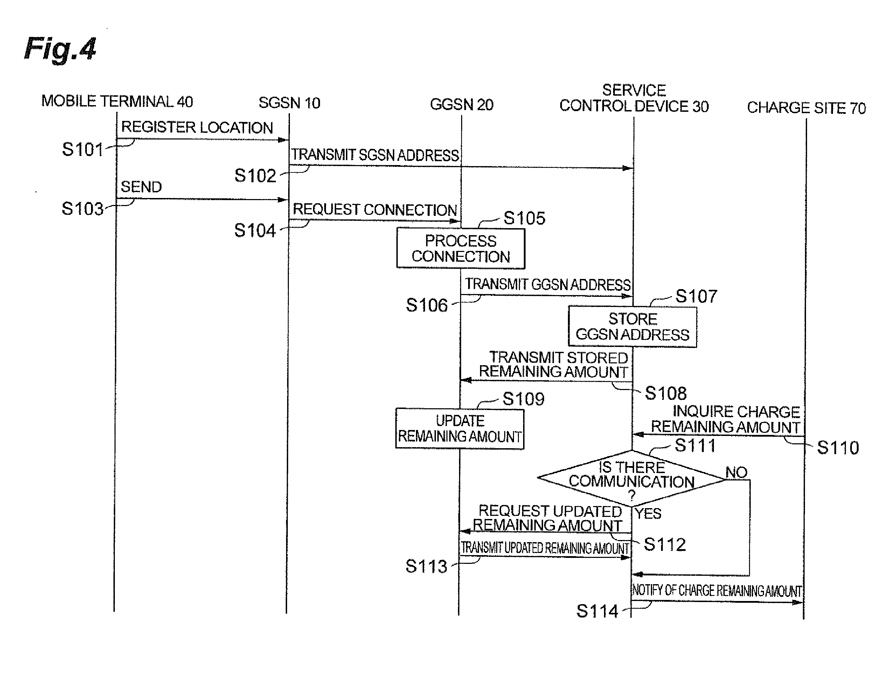

The operation of the communication system 1 described above will be described with reference to Fig. 4. Fig. 4 is a flowchart illustrating the procedure of a charge remaining amount notification process. First, the mobile terminal 40 requests a location registration from an SGSN 10 upon entering a service area of the SGSN 10 (step S101). The SGSN 10 that has performed the location registration of the mobile terminal 40 transmits the address of the SGSN 10 to the service control device 30 (step S102).

The mobile terminal 40 sends a communication request with the connection destination 60 described above with respect to the SGSN 10 that the mobile terminal 40 is within the range of (step S103). The SGSN 10 that has received the communication request requests connection to the network 50 described above from a GGSN 20 (step S104). The GGSN 20 that has received a connection request connects to the network 50 described above and performs a process that enables communication of the mobile terminal 40 and the connection destination 60 (step S105).

Next, the GGSN 20 transmits information (the address of the GGSN 20) indicating the communication state of the mobile terminal 40 from the communication state transmission unit 22 to the service control device 30 (step S106). The service control device 30 receives the address of the GGSN 20 with the communication state reception unit 34 and stores it in the communication state storage unit 35 (step S107).

Next, the service control device 30 transmits the charge remaining amount stored in the remaining amount storage unit 31 from the stored remaining amount transmission unit 32 to the GGSN 20 (step S108). A transmission destination in step S108 is identified by the address of the GGSN 20 stored in the communication state storage unit 35. The GGSN 20 receives the charge remaining amount with the stored remaining amount reception unit 24 and performs an update of the charge remaining amount with the remaining amount update unit 25 (step S109).

When the user of the mobile terminal 40, for example, inputs the inquiry for the charge remaining amount to the charge site 70, the service control device 30 accepts the inquiry for the charge remaining amount with the inquiry acceptance unit 37 (step S110). Next, the service control device 30 determines with the communication state determination unit 36 whether the mobile terminal 40 is in communication (step S111).

When the communication state determination unit 36 determines that the mobile terminal 40 is in communication, the service control device 30 requests the updated charge remaining amount from the GGSN 20 (step S112). A request destination in step S112 is identified by the address of the GGSN 20 stored in the communication state storage unit 35. The GGSN 20 that has received a request for the charge remaining amount transmits the charge remaining amount from the updated remaining amount transmission unit 26 to the service control device 30 (step S113). The service control device 30 receives the charge remaining amount with the updated remaining amount reception unit 33 and outputs the received charge remaining amount from the remaining amount notification unit 38 to the charge site 70 (step S114). Accordingly, the charge remaining amount is notified to, for example, the user of the mobile terminal 40.

When the communication state determination unit 36 determines that the mobile terminal 40 is not in communication, the service control device 30 outputs the charge remaining amount stored in the remaining amount storage unit 31 from the remaining amount notification unit 38 to the charge site 70 (step S 114).

With the communication system 1 described above, the communication packet volume is calculated by the communication volume calculation unit 23 of the GGSN 20 and the charge remaining amount is updated by the remaining amount update unit 25 while the mobile terminal 40 is in a call. When the charge remaining amount of the mobile terminal 40 is inquired, whether the mobile terminal 40 is in communication is determined by the communication state determination unit 36 of the service control device 30. In the case where the mobile terminal 40 is in communication, the charge remaining amount updated by the remaining amount update unit 25 of the GGSN 20 is acquired and notified by the updated remaining amount reception unit 33. Therefore, a real-time notification of the charge remaining amount of the mobile terminal 40 in communication is feasible. In addition, the charge remaining amount of the mobile terminal 40 in communication is acquired after the service control device 30 received the inquiry for the charge remaining amount. Therefore, it is not necessary to continue updating the charge remaining amount stored in the service control device 30 in preparation for an inquiry during communication, and the load on the GGSN 20 and the service control device 30 is reduced.

In addition, in the communication system 1, the communication control device that calculates the communication packet volume of the mobile terminal 40 is the GGSN 20. The communication state transmission unit 22 of the GGSN 20 transmits the address of the GGSN 20 as the information indicating the communication state of the mobile terminal 40. The communication state storage unit 35 of the service control device 30 stores the address of the GGSN 20 transmitted by the communication state transmission unit 22. The information indicating the communication state of the mobile terminal 40 is transmitted from the GGSN 20 involved with the communication state of the mobile terminal 40 in this manner and therefore is acquired and stored in the service control device 30 reliably.

In addition, the stored remaining amount transmission unit 32 of the service control device 30 identifies the GGSN 20 at the transmission destination of the charge remaining amount on the basis of the address of the GGSN 20 stored in the communication state storage unit 35. The updated remaining amount reception unit 33 identifies the GGSN 20 at the request destination of the charge remaining amount on the basis of the address of the GGSN 20 stored in the communication state storage unit 35. Since the GGSN 20 is identified on the basis of the address stored in advance in the communication state storage unit 35 in this manner, a prompt notification of the charge remaining amount in accordance with the current communication becomes possible.

Furthermore, the communication state determination unit 36 determines whether the mobile terminal 40 is in communication on the basis of whether the address of the GGSN 20 is stored in the communication state storage unit 35. In this manner, the address for identifying the GGSN 20 is also utilized in the determination on whether the mobile terminal 40 is in communication, and the data volume that the communication state storage unit 35 should store is reduced. Since the address of the GGSN 20 is discarded when the communication of the mobile terminal 40 is terminated, the data volume that the communication state storage unit 35 should store is reduced further.

Note that the communication control device that calculates the communication packet volume of the mobile terminal 40 may be the SGSN 10 instead of the GGSN 20. The configuration and the operation in this case will be described below.

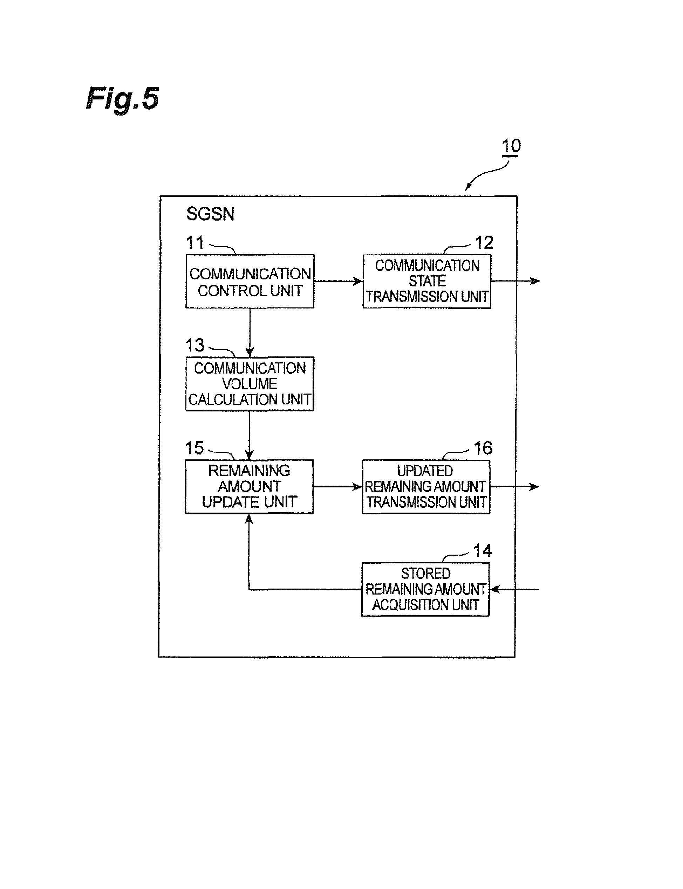

Fig. 5 is a function block diagram of the SGSN that calculates the communication volume. As illustrated in Fig. 5, the SGSN 10 includes a communication control unit 11, a communication state transmission unit 12, a communication volume calculation unit 13, a stored remaining amount reception unit 14, a remaining amount update unit 15, and an updated remaining amount transmission unit 16.

The communication control unit 11 performs communication control as a switch. The communication state transmission unit 12 transmits the address of the SGSN 10 to the service control device 30.

The communication volume calculation unit 13 calculates the communication packet volume of the mobile terminal 40. The stored remaining amount reception unit 14 acquires the charge remaining amount stored in the service control device 30 upon start of communication of the mobile terminal 40. The remaining amount update unit 15 subtracts the communication packet volume calculated by the communication volume calculation unit 13 from the charge remaining amount acquired by the stored remaining amount reception unit 14 and updates the charge remaining amount. The updated remaining amount transmission unit 16 transmits the charge remaining amount updated by the remaining amount update unit 15 to the service control device 30.

In the case where the SGSN 10 calculates the communication packet volume, the communication state reception unit 34 of the service control device 30 receives the address of the SGSN 10 transmitted from the communication state transmission unit 12 in the SGSN 10. In addition, the communication state reception unit 34 receives the address of the GGSN 20 transmitted from the GGSN 20.

The communication state storage unit 35 stores the addresses of the SGSN 10 and the GGSN 20 that the communication state reception unit 34 has received and discards the address of the GGSN 20 upon the communication of the mobile terminal 40 being terminated. The communication state storage unit 35 discards the address of the SGSN 10 upon the mobile terminal 40 moving to an area of another SGSN 10. The communication state determination unit 36 determines that the mobile terminal 40 is in communication in the case where the address of the GGSN 20 is stored in the communication state storage unit 35 and determines that the mobile terminal 40 is not in communication in the case where it is not stored. The address of the SGSN 10 stored in the communication state storage unit 35 is used to identify the SGSN 10 in the transmission of the charge remaining amount to the SGSN 10 from the stored remaining amount transmission unit 32 and the reception of the charge remaining amount by the updated remaining amount reception unit 33 from the SGSN 10.

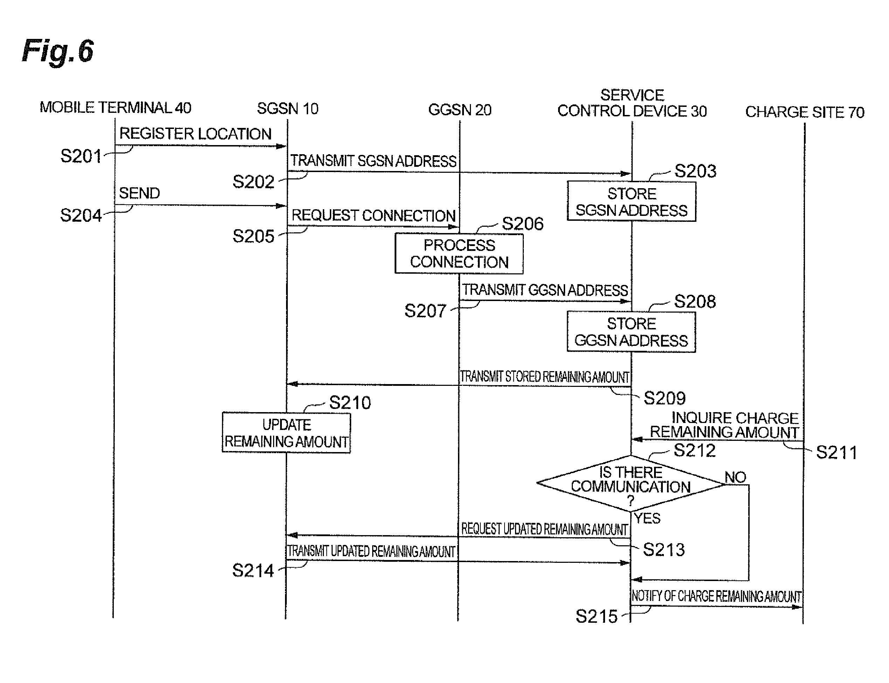

The operation of the communication system 1 in the case where the SGSN 10 calculates the communication packet volume will be described with reference to Fig. 6. Fig. 6 is a flowchart illustrating the procedure of the charge remaining amount notification process in the case where the SGSN calculates the communication volume. First, the mobile terminal 40 requests a location registration from the SGSN 10 upon entering into a service area of the SGSN 10 (step S201). The SGSN 10 that has received a location registration request transmits the address of the SGSN 10 from the communication state transmission unit 12 to the service control device 30 (step S202). The service control device 30 receives the address of the SGSN 10 with the communication state reception unit 34 and stores it in the communication state storage unit 35 (step S203).

Subsequently, communication of the mobile terminal 40 and the connection destination 60 is made possible by similar processes as in steps S103 to S105 described above (steps S204 to S206), and the address of the GGSN 20 is transmitted from the GGSN 20 to the service control device 30 (step S207). The service control device 30 receives the address of the GGSN 20 with the communication state reception unit 34 and stores it in the communication state storage unit 35 (step S208).

Next, the service control device 30 transmits the charge remaining amount stored in the remaining amount storage unit 31 from the stored remaining amount transmission unit 32 to the SGSN 10 (step S209). A transmission destination in step S209 is identified by the address of the SGSN 10 stored in the communication state storage unit 35. The SGSN 10 receives the charge remaining amount with the stored remaining amount reception unit 14 and performs an update of the charge remaining amount with the remaining amount update unit 15 (step S210).

When the user of the mobile terminal 40, for example, inputs an inquiry for the charge remaining amount to the charge site 70, the service control device 30 accepts the inquiry for the charge remaining amount with the inquiry acceptance unit 37 (step S211). Next, the service control device 30 determines with the communication state determination unit 36 whether the mobile terminal 40 is in communication (step S212).

When the communication state determination unit 36 determines that the mobile terminal 40 is in communication, the service control device 30 requests the updated charge remaining amount from the SGSN 10 (step S213). A request destination in step S213 is identified by the address of the SGSN 10 stored in the communication state storage unit 35. The SGSN 10 that has received a request for the charge remaining amount transmits the charge remaining amount from the updated remaining amount transmission unit 16 to the service control device 30 (step S214). The service control device 30 receives the charge remaining amount with the updated remaining amount reception unit 33 and outputs the received charge remaining amount from the remaining amount notification unit 38 to the charge site 70 (step S215). Accordingly, the charge remaining amount is notified to, for example, the user of the mobile terminal 40.

When the communication state determination unit 36 determines that the mobile terminal 40 is not in communication, the service control device 30 outputs the charge remaining amount stored in the remaining amount storage unit 31 from the remaining amount notification unit 38 to the charge site 70 (step S215).

In the case where the SGSN 10 calculates the communication packet volume, load in a process of calculating the communication packet volume of the mobile terminal 40 is distributed to the SGSN 10 arranged for each communication area.

A preferred embodiment of the present invention has been described above. However, the present invention is not necessarily limited to the embodiment described above, and various modifications are possible without departing from the gist thereof.

The GGSN 20 transmits the address of the GGSN 20 as the information indicating the communication state of the mobile terminal 40, and the service control device 30 stores the address of the GGSN 20 and determines whether the mobile terminal 40 is in communication on the basis of whether the address of the GGSN 20 is stored. However, the invention is not limited thereto. For example, the GGSN 20 may transmit information indicating the start and the termination of communication of the mobile terminal 40. In this case, the service control device 30 stores flag data indicating the communication state of the mobile terminal 40, causes the flag data to be in an on-state at the time of the start of communication of the mobile terminal 40, causes the flag data to be in an off-state at the time of the termination of communication of the mobile terminal 40, and determines whether the mobile terminal 40 is in communication on the basis of whether the flag data is in the on-state or in the off-state, for example.

The charge remaining amount of the mobile terminal 40 in communication is acquired by the GGSN 20 or the SGSN 10 and updated in the GGSN 20 or the SGSN 10. However, the invention is not limited thereto. For example, the service control device 30 may acquire the communication packet volume calculated by the GGSN 20 or the SGSN 10 and update the charge remaining amount of the mobile terminal 40.

The embodiment described above mainly uses a GPRS communication system, but the invention is not limited to such communication systems. It is appropriately applicable in communication systems in which packet data can be communicated, and it is also applicable in a novel communication system such as Long Term Evolution (LTE). In that regard, corresponding to the GGSN 20 is a Packet Data Network Gateway (P-GW), and corresponding to the SGSN 10 is a Mobility Management Entity (MME) or a Serving Gateway (S-GW). Corresponding to the service control device 30 is a Home Subscriber System (HSS). Note that a Policy and Charging Rule Function (PCRF) may be used as the service control device 30.

### Industrial Applicability

The present invention can be utilized in a communication system for a mobile terminal.

### Reference Signs List

1... communication system, 10... SGSN (communication control device), 20... GGSN (communication control device), 30... service control device, 33... updated remaining amount reception unit, 35... communication state storage unit, 36... communication state determination unit, 37... inquiry acceptance unit, 38... remaining amount notification unit.

## Claims

1. A communication system comprising:
a communication control device that calculates a communication volume of a mobile terminal; and
a service control device that stores a charge remaining amount corresponding to a communication volume available to the mobile terminal, wherein
the service control device includes:
communication state storage means for storing information indicating a communication state of the mobile terminal,
inquiry acceptance means for accepting an inquiry for the charge remaining amount of the mobile terminal,
communication state determination means for determining whether the mobile terminal is in communication on the basis of the information stored in the communication state storage means,
updated remaining amount acquisition means for acquiring the charge remaining amount updated in accordance with the communication volume calculated by the communication control device when the communication state determination means determines that the mobile terminal is in communication, and
remaining amount notification means for notifying of the charge remaining amount of the mobile terminal in response to the inquiry that the inquiry acceptance means has accepted.

2. The communication system according to claim 1, wherein the communication control device is a switch arranged for each communication area.

3. The communication system according to claim 1, wherein the communication control device is a gateway switch for connection to an external network and includes communication state transmission means for transmitting the information indicating the communication state of the mobile terminal, and
the communication state storage means in the service control device stores the information indicating the communication state of the mobile terminal transmitted by the communication state transmission means.

4. The communication system according to claim 3, wherein
in the communication control device,
the communication state transmission means transmits an address of the gateway switch, and
in the service control device,
the communication state storage means stores the address of the gateway switch transmitted by the communication state transmission means, and
the communication state determination means determines whether the mobile terminal is in communication on the basis of whether the address of the gateway switch is stored in the communication state storage means.

5. A service control device that, in a communication system including a communication control device calculating a communication volume of a mobile terminal, stores a charge remaining amount corresponding to a communication volume available to the mobile terminal, the service control device comprising:
communication state storage means for storing information indicating a communication state of the mobile terminal,
inquiry acceptance means for accepting an inquiry for the charge remaining amount of the mobile terminal,
communication state determination means for determining whether the mobile terminal is in communication on the basis of the information stored in the communication state storage means,
updated remaining amount acquisition means for acquiring the charge remaining amount updated in accordance with the communication volume calculated by the communication control device when the communication state determination means determines that the mobile terminal is in communication, and
remaining amount notification means for notifying of the charge remaining amount of the mobile terminal in response to the inquiry that the inquiry acceptance means has accepted.

6. A communication method executed by a communication system including a communication control device that calculates a communication volume of a mobile terminal and a service control device that stores a charge remaining amount corresponding to a communication volume available to the mobile terminal, the communication method comprising:
a communication state storage step of, by the service control device, storing information indicating a communication state of the mobile terminal,
an inquiry acceptance step of, by the service control device, accepting an inquiry for the charge remaining amount of the mobile terminal,
a communication state determination step of, by the service control device, determining whether the mobile terminal is in communication on the basis of the information stored in the communication state storage step,
an updated remaining amount acquisition step of, by the service control device, acquiring the charge remaining amount updated in accordance with the communication volume calculated by the communication control device when it is determined that the mobile terminal is in communication in the communication state determination step, and
a remaining amount notification step of, by the service control device, notifying of the charge remaining amount of the mobile terminal in response to the inquiry accepted in the inquiry acceptance step.
